# EUROPÄISCHE PATENTSCHRIFT

(11) **EP 2 010 865 B1**
(45) Veröffentlichungstag und Bekanntmachung des Hinweises auf die Patenterteilung: **16.10.2013**
(21) Anmeldenummer: 07722230.5
(22) Anmeldetag: 17.04.2007
(51) Int. Cl.: G01B 21/20, G01B 11/24, G01B 5/00, G01B 5/012

(54) **PROFILMESSUNG VON ROHRENDEN**
MEASURING THE PROFILE OF PIPE ENDS
MESURE DE PROFIL D'EXTRÉMITÉS DE TUBE

(30) Priorität: 24.04.2006 DE 102006019354
(43) Veröffentlichungstag der Anmeldung: 07.01.2009
(73) Patentinhaber: Rattunde & Co GmbH, 19288 Ludwigslust (DE)
(72) Erfinder: RATTUNDE, Ulrich, 19322 Bentwisch (DE)
(74) Vertreter: Groth, Wieland
(86) Internationale Anmeldenummer: PCT/DE2007/000672
(87) Internationale Veröffentlichungsnummer: WO 2007/124717

(56) Entgegenhaltungen:
- WO-A1-03/008900
- DE-A1- 2 419 698
- DE-A1- 4 034 702
- DE-A1- 10 258 579
- US-A- 4 084 324
- US-A- 5 040 306
- US-A1- 2005 235 507
- US-A1- 2007 162 255
- US-B1- 6 539 642

## Beschreibung

Die Erfindung betrifft eine Profilmessvorrichtung zur Messung des Profils einer Körperoberfläche, insbesondere des Profils der Oberfläche eines Rohrendes, sowie ein Verfahren zur Messung des Profils einer Körperoberfläche mit Hilfe einer solchen Profilmessvorrichtung.

Rohrschneidemaschinen längen Abschnitte von Rohren ab. Bei modernen Rohrschneidemaschinen findet eine integrierte Nachbehandlung des abgelängten Rohrabschnitts in Form von Entgraten, Anfasen oder Waschen der Rohrenden statt. Die Anforderungen an die Präzision der Rohrbearbeitung sind hoch. Zur Kontrolle des Rohrabschnitts finden Kontrollmessungen nach der Bearbeitung statt. Dabei wird der Fasenwinkel, die Wandungsstärke des Rohrendes, der Planlauf der Stirnfläche, einzeln für jeden Rohrabschnitt geprüft. Dazu sind im Stand der Technik 3D-Messverfahren bekannt. Die bekannten 3D-Messverfahren dauern lange und werden den geforderten, kurzen Prüfzeiten von etwa einer Sekunde für jeden Messvorgang nicht gerecht.

Aus der DE 40 34 702 A1 ist eine Vorrichtung zur Prüfung der Fase und Schrägen eines Biegestempels bekannt. Dort wird ein Ausleger, an dem zwei Sensoren vorgesehen sind, zunächst vertikal eingestellt und dann der gesamte Ausleger auf zwei Profilschienen horizontal verschoben. Dabei nehmen die Messköpfe Messwerte auf. Nachteiligerweise sind hierfür mehrere Einstellvorgänge notwendig, und der Ausleger muss in verschiedene Richtungen verfahren werden, um Messwerte aufnehmen zu können.

In der US 6,539,642 B1 sind lasergestützte Sensoren beschrieben, deren Messgenauigkeit im Bereich von 0,1 µm liegt.

Die US 5,040,306 offenbart einen Messkopf einer Oberflächenmessvorrichtung. Die Messvorrichtung ist in zwei senkrecht zueinander stehenden Bewegungsrichtungen beweglich. Nachteiligerweise können mit der Vorrichtung keine Profile von Rohrenden o. Ä. gemessen werden.

Aus der DE 24 19 698 U1 ist eine Vorrichtung zur Ermittlung des Längskonturenverlaufs von Rohrenden bekannt. Die Vorrichtung umfasst zwei Fühler, die verschwenkbar ausgebildet sind. Eine Bestimmung des Profils der Stirnseite des Rohres ist mit der Vorrichtung nicht möglich.

Es ist Aufgabe der Erfindung, eine Profilmessvorrichtung, insbesondere für eine Rohrschneidemaschine und ein Verfahren zur Messung eines Profils, zur Verfügung zu stellen, die bzw. das innerhalb kurzer Zeit die Messung des Profils einer Oberfläche eines Körpers, insbesondere die Messung des Profils einer Wandung eines Rohrendes ermöglicht.

Die Aufgabe wird durch eine eingangs genannte Profilmessvorrichtung gelöst, die die Merkmale des Hauptanspruchs aufweist.

Die erfindungsgemäße Profilmessvorrichtung macht von der Idee Gebrauch, einen ersten Messarm, einen zweiten Messarm, und die Oberfläche relativ zueinander und eindimensional zu verfahren und durch einen schräg zur Verfahrrichtung, gegenüber jedem Messarm relativ beweglichen Tastkopf, ein Profil zu vermessen, das gekrümmt ist und in einer zweidimensionalen Ebene verläuft. Die Steuerung der Messvorrichtung ist damit besonders einfach und schnell.

Die Relativstellung zwischen dem wenigstens einen ersten Messarm und der Oberfläche des Körpers ist dabei durch die Verfahreinrichtung eindimensional, vorzugsweise genau linear, veränderbar. Es ist denkbar, den Messarm zu verfahren, es ist aber auch denkbar den Körper, oder beide relativ zueinander zu verfahren.

Die Tastköpfe tasten die Oberfläche während der Messung ständig ab, vorzugsweise berühren die Tastköpfe die Oberfläche ständig. Die mechanische Abtastung durch Berührung ist besonders genau.

Zur Ermittlung von Messwerten ist in dem wenigstens einen ersten Messarm ein erster Tastkopfsensor montiert, der die Relativbewegung des ersten Tastkopfes gegenüber dem ersten Messarm misst und die Messwerte günstigenfalls einer Recheneinheit zuführt.

Erfindungsgemäß ist zur Bestimmung insbesondere des Profils einer Wandung eines Rohrendes, ein zweiter, vorzugsweise dem ersten Messarm baugleicher Messarm vorgesehen. Der zweite Messarm weist einen zweiten, die Oberfläche während der Messung, vorzugsweise ständig berührenden Tastkopf auf, wobei die Relativbewegungsrichtung des zweiten Tastkopfes schräg zur Verfahrrichtung und schräg zur ersten Relativbewegungsrichtung angeordnet ist. Der zweite Messarm weist einen zweiten Tastkopfsensor auf, der mit der Recheneinheit in Verbindung steht und ihr die Messwerte zuführt. Günstigenfalls ist die Verfahrrichtung in Längsrichtung des Rohrabschnitts gewählt, und der erste Tastkopf tastet einen Bereich der Stirnfläche und die Innenwandung und der zweite Tastkopf tastet einen anderen Teil der Stirnfläche und die Außenwandung des Rohrendes ab.

Günstigenfalls sind die beiden Messarme zur Verfahrrichtung spiegelbildlich angeordnet. Die erste und zweite Relativbewegungsrichtung können in einer Ebene liegen, in der auch die Richtung der Verfahrbewegung verläuft. Eine solche Anordnung der vorzugsweise drei Bewegungsrichtungen macht die Auswertung der Messdaten besonders einfach. Darüber hinaus ist die Steuerung der Messvorrichtung schnell.

Der erste und zweite Messarm sind vorzugsweise positionsfest gegeneinander, günstigstenfalls als Bauteile eines Läufer miteinander verbunden. Die Relativbewegungsrichtung ist damit besonders stabil. Messfehler werden verringert.

In einer bevorzugten Ausführungsform der Erfindung, weist nur die Verfahreinrichtung einen Antrieb auf. Die Bewegung des ersten und des zweiten Tastkopfes erfolgt passiv, durch den von der Oberfläche auf den Tastkopf ausgeübten Gegendruck. Vorzugsweise steht jeder der beiden Tastköpfe mit einer Rückstellfeder in Verbindung, die den jeweiligen Tastkopf während der Messung gegen die Oberfläche drückt. Dadurch ist der ständige Kontakt des Tastkopfes mit der Oberfläche gewährleistet, der für eine Hochpräzisionsmessung erforderlich ist.

In einer besonders bevorzugten Ausführungsform der erfindungsgemäßen Profilmessvorrichtung, weist der erste und der zweite Messarm jeweils eine Führung für jeweils eine Messstange auf. Die Führung ist günstigerweise als besonders führungsstabiles Rollenlager ausgebildet. Die erste Messstange kann an einem der Oberfläche während der Messung zugewandten Ende den ersten Tastkopf und an einem entgegen gesetzten, in den ersten Messarm hineinragenden Ende, eine erste Messptatte aufweisen. Die Verschiebung der ersten Messplatte ist von einem ersten Tastkopfsensor detektierbar. Der erste Tastkopfsensor kann als elektronischer Messtaster oder auch als Lasersensor ausgebildet sein. Im ersten Fall ist die Verschiebung mechanisch messbar und im zweiten Fall dient die erste Messplatte zur Reflexion eines von einem Lasersensor ausgesendeten Signals. Der erste Tastkopfsensor ist in Verlängerung der ersten Messstange im ersten Messarm gegenüber dem ersten Messarm positionsfest vorgesehen. Der erste Tastkopfsensor misst den Abstand zur ersten Messplatte und übermittelt die Messdaten der Recheneinheit, die ermittelt damit z.B. die Länge der Relativbewegung des Tastkopfes. Die eigentliche Entfernungsmessung findet vorteilhafterweise geschützt im Innern des ersten Messarms statt. Entsprechendes gilt für den zweiten Messarm.

Vorzugsweise sind genau zwei Messarme vorgesehen, die gegenüber der Verfahrrichtung jeweils in einem Winkel von jeweils 30 Grad angeordnet sind. Jeder der Messköpfe ist konisch zulaufend und weist an seinem äußeren Ende eine rollbare Kugel auf. Die rollbare Kugel läuft während der Messung entlang der Oberfläche in dem Schnitt. Diese Form der Tastkopfs ist besonders unempfindlich.

Günstigerweise ist zwischen der Führung und dem Läufer der Verfahreinrichtung eine dritte Messeinrichtung vorgesehen, die einen dritten Sensor und eine dritte Messplatte aufweist. Die dritte Messplatte ist positionsfest an dem Läufer und der Sensor ist positionsfest an der Führung montiert. Beide wirken als dritte Messeinrichtung zusammen. Der dritte Sensor misst die Verfahrstrecke und führt die Messwerte der Recheneinheit zu. Kostengünstigerweise sind alle drei Sensoren baugleich.

Die Recheneinheit berechnet aus den Messwerten des ersten und des zweiten Tastkopfsensors, sowie aus den Messewerten des dritten Sensors das Profil der Oberfläche. Dabei entspricht die Länge des vermessenen Profils im Wesentlichen der Verfahrstrecke. Die maximale Breite des Körpers ist durch den maximalen Abstand der beiden Tastköpfe nach oben begrenzt.

Die Aufgabe wird hinsichtlich des Verfahrens durch ein Verfahren mit den Merkmalen des Anspruchs 17 gelöst.

Der Körper wird auf der Halteeinrichtung befestigt, und ein wenigstens erster Tastkopf tastet die Oberfläche während der Messung ab. Während der Messung wird der wenigstens eine erste Tastkopf relativ zum wenigstens ersten Messarm schräg zu einer Verfahrrichtung der Verfahreinrichtung bewegt, und eine erste Relativbewegung wird zwischen dem wenigstens einen ersten Tastkopf und dem wenigstens einen ersten Messarm mit wenigstens einem ersten Tastkopfsensor gemessen. Die Verfahreinrichtung verändert in einer eindimensionalen Verfahrbewegung eine Relativstellung zwischen dem wenigstens einen ersten Messarm und der Oberfläche des Körpers.

In dem erfindungsgemäßen, insbesondere zum Prüfen von Rohrenden geeigneten Verfahren, ist ein zweiter, dem ersten Messarm baugleicher Messarm vorgesehen.

Der zweite Tastkopf tastet einen anderen Bereich der Oberfläche des Körpers als der erste Tastkopf während der Messung ab. Der zweite Tastkopf wird dabei während der Messung relativ zum zweiten Messarm schräg zu einer Verfahrrichtung bewegt. Eine zweite Relativbewegung wird zwischen dem zweiten Tastkopf und dem zweiten Messarm mit einem zweiten Tastkopfsensor gemessen. Die Verfahreinrichtung verändert in einer eindimensionalen Verfahrbewegung eine Relativstellung zwischen dem zweiten Messarm und der Oberfläche des Körpers. Der erste und zweite Tastkopf führen auch eine Relativbewegung zueinander aus.

Die Verfahreinrichtung wird vorzugsweise durch einen Antrieb angetrieben. Durch die Verfahrbewegung wird der erste Tastkopf gegen die Oberfläche gedrückt. Der erste Tastkopf weicht in einer Relativbewegung zum ersten Messarm dem Gegendruck aus und dringt ein Stück weit in den ersten Messarm ein. Entsprechende gilt für den zweiten Tastkopf des zweiten Messarms.

Vor Beginn der Messung werden die beiden sich vorzugsweise berührenden Tastköpfe gegen die Stirnfläche des zu vermessenden Rohrendes verfahren, bis sie ihn berühren. Spätestens jetzt werden Messwerte aufgenommen und an die Recheneinheit weitergeleitet. Durch den Vorschub der Verfahreinrichtung werden die beiden Tastköpfe gegen die Stirnfläche gedrückt und dringen durch den Gegendruck in die jeweiligen schräg gestellten Messarme ein. Durch die Schrägstellung bewegen sich die beiden Tastköpfe voneinander weg. Die beiden Tastköpfe fahren das Profil ab und übermitteln ständig die Messdaten an die Recheneinheit. Die Recheneinheit berechnet aus den Messdaten das Profil und vergleicht in einer Vergleichseinrichtung die gemessenen Werte mit Sollwerten, die in einem Speicher abgelegt sind.

Wenn die Istwerte außerhalb einer vorgegebenen, im Speicher abgelegten Toleranz liegen, wird ein Aussortierungssignal an eine Entnahmevorrichtung für den Körper, z.B. den abgelängten Rohrabschnitt, gegeben. Die Entnahmevorrichtung ist vorzugsweise ein Greifarm. Wenn die Messung Istwerte innerhalb der Toleranz liefert, wird ein Einsortierungssignal an den Greifarm weitergegeben, der das abgelängte Rohrende zur Weiterverarbeitung einsortiert.

Die erfindungsgemäße Profilmessvorrichtung ist in einer besonders bevorzugten Ausführungsform der Erfindung neben dem Sägeblatt einer integrierten Sägemaschine für Metallrohre vorgesehen. Dort überprüft die Profilmessvorrichtung die Einhaltung der Sollwerte für Wandungsstärke, Fasenwinkel, Stirnfläche usw. innerhalb einer jeweiligen Toleranz.

Die Erfindung wird anhand eines Ausführungsbeispieles in vier Figuren beschrieben. Dabei zeigen:
- Fig. 1: eine schematische Draufsicht einer erfindungsgemäßen Messvorrichtung mit einem eingespannten abgelängte Rohrabschnitt,
- Fig. 2a: eine schematische Ansicht der Ausgangsposition der Tastkopfanordnung zur Durchführung des erfindungsgemäßen Messverfahrens,
- Fig. 2b: eine schematische Ansicht einer Tastkopfanordnung während des Messverfahrens,
- Fig. 3: eine Schnittansicht der Messvorrichtung,
- Fig. 4: eine Explosionsansicht der Messvorrichtung in Fig. 3,

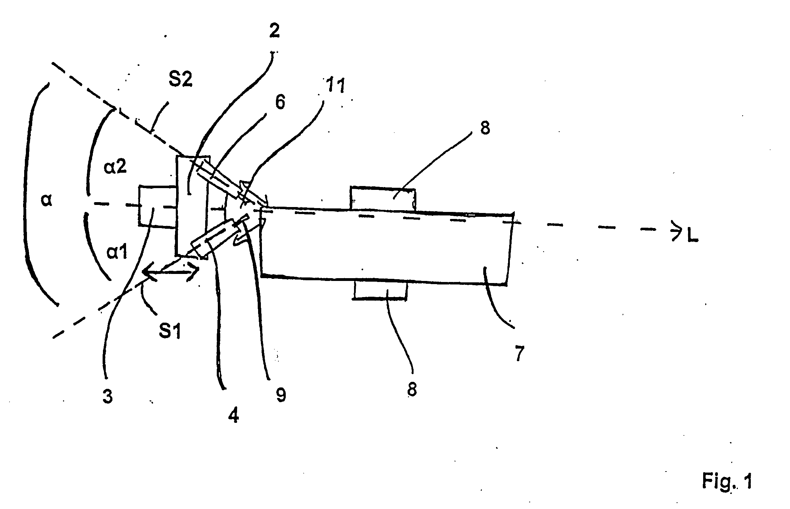

Die in Fig. 1 dargestellte Messvorrichtung 1 weist einen auf einer Führung 3 in einer geradlinigen Verfahrrichtung L hin und her verfahrbaren Läufer 2 auf. Positionsfester Bestandteil des Läufers 2 ist ein erster Messarm 4 und ein zweiter Messarm 6. Der erste Messarm 4 und der zweite Messarm 6 sind in einem Winkel α von etwa 60 Grad zueinander angeordnet. Die Messvorrichtung 1 ist zur Längsrichtung L im Wesentlichen spiegelbildlich ausgebildet, und eine erste Symmetrieachse S1 des ersten Messarmes 4 als auch eine zweite Symmetrieachse S2 des zweiten Messarmes 6 sind in einem Winkel α₁ von etwa 30° und in einem Winkel α₂ von ebenfalls etwa 30° zur Verfahrrichtung L angeordnet. Die Anordnung in den Winkeln α, α₁, α₂ bleibt während der gesamten Messung bestehen.

Mit der Messvorrichtung 1 ist das Profil einer Wandung eines abgelängten Rohrabschnitts 7 entlang einer durch die beiden Messarme 4, 6 gebildeten Schnittebene messbar. Während der Messung ist ein Rohr 7 in Längsrichtung L zwischen zwei Haltebacken 8 gegenüber der Führung 3 positionsfest eingeklemmt. Die beiden Messarme 4, 6 sind auf dem Läufer 2 in Längsrichtung L hin- und her verfahrbar. Der erste Messarm 4 weist an seinem dem eingeklemmten Rohrabschnitt 7 zugewandten Ende einen ersten Tastkopf 8 auf, der in Längsrichtung des Messarms 4 hin- und her beweglich ist. Der zweite Messarm 6 weist an seinem dem Rohrabschnitt 7 zugewandten Ende einen zweiten Tastkopf 11 auf, der in Längsrichtung des zweiten Messarmes 6 hin- und her beweglich ist.

Die Messvorrichtung 1 ist als abschließende Qualitätskontrolle in einer (nicht eingezeichneten) integrierten Sägeanlage vorgesehen. In der integrierten Sägeanlage werden Stangenprofile, vorzugsweise Metallrohre, aber auch Vollprofile abgelängt. Die Enden der Rohrabschnitte werden einer Nachbehandlung durch Anfasen, Entgraten und Waschen unterworfen. Dabei sind Sollwerte des Anfaswinkels, der Stirnfläche und der Wandungsdicke mit hoher Präzision einzuhalten. Typische Toleranzen betragen dabei 0,1 mm bzw. 0,1°. Diese Toleranzen sollten mit einer Wahrscheinlichkeit von 99,99% eingehalten werden. Die Messvorrichtung 1 gestattet eine schnelle Überprüfung der Istwerte des Rohrendes des abgelängten Rohrabschnitts 7. Die integrierten Rohrsägeanlagen erlauben eine extrem schnelle Taktung, so dass für einen vollständigen Messvorgang durch die Messvorrichtung 1, einschließlich Laden, Festklemmen des Rohrabschnittes 7 zwischen den Haltebacken 8, dem eigentlichen Messvorgang und dem Entladen des gemessenen Rohabschnitts 7, etwa 1,3 Sekunden zur Verfügung stehen. In dieser Zeit prüft auch die Messvorrichtung 1, ob die Istwerte innerhalb der vorgegebenen Toleranz der Sollwerte liegen.

Für das Laden und Entladen ist ein (nicht eingezeichneter) Hebearm vorgesehen. Messvorrichtung 1, Haltebacken 8 und Hebearm sind über eine (nicht eingezeichnete) Steuerung miteinander gekoppelt. Die Steuerung entscheidet für den Fall der Überschreitung der geforderten Toleranz ein Aussortieren des abgelängten Rohrabschnittes. Für den Fall der Toleranzeinhaltung entscheidet die Steuerung für ein Verwerten des Rohrabschnitts 7. Für jeden Fall steht ein Behälter für die Rohrabschnitte 7 zur Verfügung.

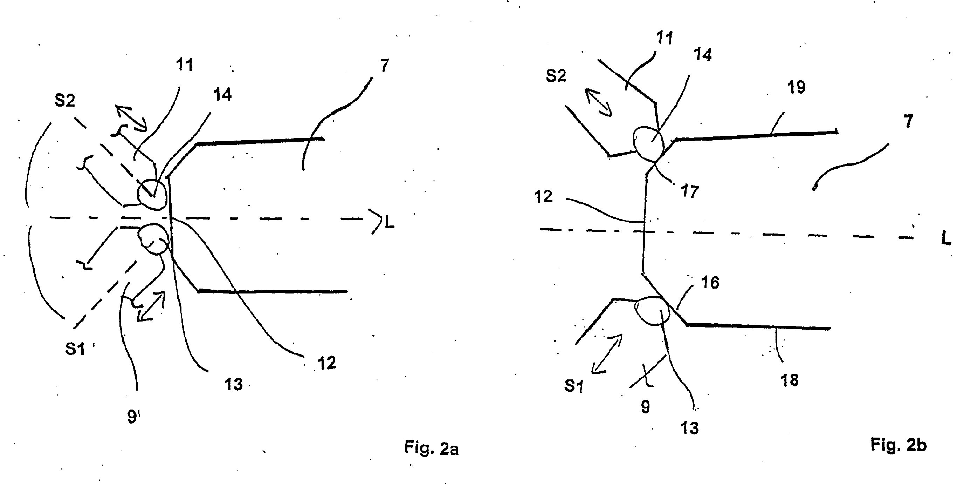

Das erfindungsgemäße Verfahren ist in zwei nacheinander folgenden Schritten in Fig. 2a und Fig. 2b dargestellt. Es läuft wie folgt ab: Der abgelängte Rohrabschnitt 7 wird mit dem Hebearm auf eine Auflage zwischen den Haltebacken 8 gelegt und dort mit den Haltebacken 8 festgeklemmt. Der zwischen den Haltebacken 8 festgeklemmte Rohrabschnitt 7 ist räumlich positionsfest. Die Stirnfläche 12 des Rohrabschnitts 7 ist dabei, gemäß Fig. 2a, wenige Zentimeter neben den vor der Messung direkt nebeneinander liegenden Tastköpfen 9, 11 des ersten und zweiten Messarmes 4, 6 angeordnet. Eine Spitze jedes Tastkopfes 9, 11 weist je eine rollbare Kugel 13, 14 auf. Die erste rollbare Kugel 13 ist an der Spitze des ersten Tastkopfes 9 angeordnet, die zweite rollbare Kugel 14 ist in der Spitze des zweiten Tastkopfes 11 angeordnet. Die beiden Kugeln 13, 14 berühren sich vor der Messung.

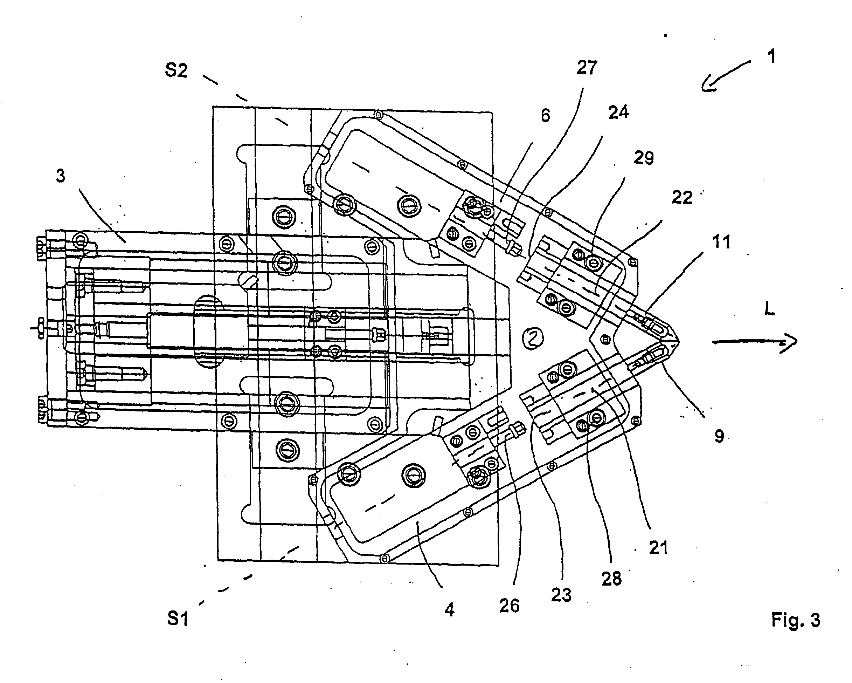

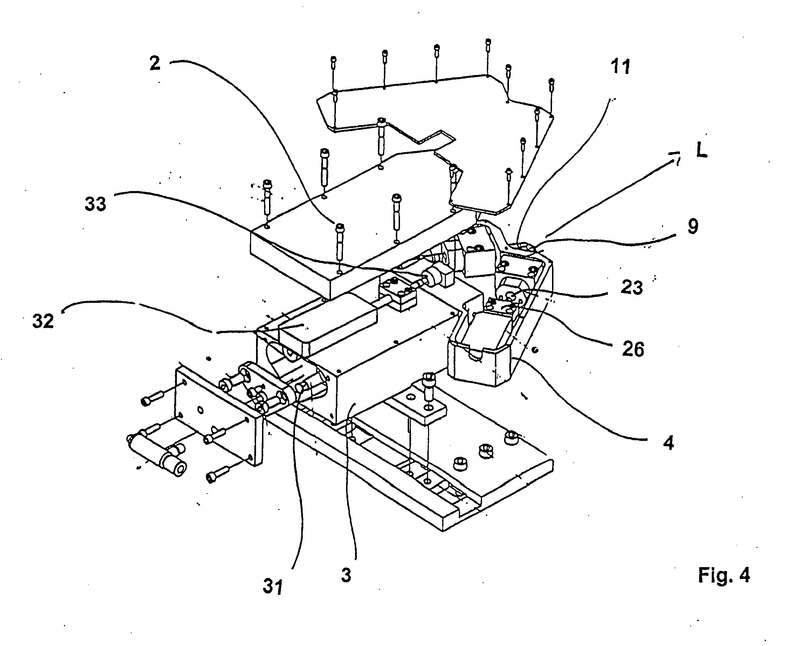

Mittels des auf der Führung 3 in Längsrichtung L verfahrbaren Läufers 2 werden die beiden Messarme 4, 6 in Längsrichtung L zur Stirnfläche 12 verfahren, bis die beiden Tastköpfe 9, 11 etwa mittig die Stirnfläche 12 des zu vermessenden Endes des Rohrabschnitts 7 berühren. Es werden, wie zu Fig. 3 und Fig. 4 beschrieben, laufend Positionsmesswerte der beiden Tastköpfe 9, 11 aufgenommen. Der eigentliche Messvorgang beginnt, sobald beide Kugeln 13, 14 die Stirnfläche 12 berühren. Das erfolgt etwa gleichzeitig. Der Läufer 2 wird weiter in Längsrichtung L linear verfahren. Die Verfahrbewegung in Längsrichtung L und der durch die positionsfeste Stirnfläche 12 auf die beiden Tastköpfe 13, 14 ausgeübte Gegendruck führt zu einer Ausweichbewegung jeder der beiden Tastköpfe 9, 11 entlang der jeweiligen Relativbewegungsachsen S1 bzw. S2, die den Symmetrieachsen entsprechen, in den jeweiligen Messarm 4, 6 hinein.

Die Winkelanordnung α₁, α₂ der beiden Relativbewegungsachsen S1, S2 zur Längsrichtung L bewirkt, während des Hineinwanderns der Tastköpfe 9, 11 in den jeweilige Messarm 4, 6, ein Auseinanderlaufen der ersten und zweiten Kugel 13, 14. Während der gesamten Messung bleiben beide Kugeln 13, 14 in Kontakt mit der Oberfläche des Endes des Rohrabschnittes 7. Die erste und zweite Kugel 13, 14 rollen relativ zum Rohrabschnitt 7 einander entgegengesetzt, entlang der Stirnfläche 12, bis die erste Kugel 13 zur inneren Fase 16 des Rohrendes gelangt. Die innere Fase 16 bildet mit der Stirnfläche 12 einen das Rohrende umlaufenden ersten inneren Fasenwinkel aus. Die äußere Kugel 14 rollt zur äußeren Fase 17. Die äußere Fase 17 bildet mit der Stirnfläche 12 einen ersten äußeren Fasenwinkel aus.

Die erste und zweite Kugel 13, 14 erreichen während der dargestellten Messung den ersten inneren bzw. den ersten äußeren Fasenwinkel etwa gleichzeitig. Durch den Vorschub der beiden Messarme 4, 6 laufen die beiden Kugel 13, 14 danach auf der inneren Fase 16 bzw. auf der äußeren Fase 17 entlang, bis zum zweiten inneren Fasenwinkel bzw. bis zum zweiten äußeren Fasenwinkel. Durch den Vorschub des ersten Messarms 9 in Längsrichtung L gelangt die erste Kugel 13 nach Überfahren der inneren Fase 16 zum zweiten inneren Fasenwinkel und dann zur inneren Rohrwandung 18. Die erste Kugel 13 läuft, entsprechend der Dauer und Länge des Vorschubs, ein Stück weit in Längsrichtung L entlang der inneren Rohrwandung 18. Währenddessen werden ständig Messwerte registriert (etwa 8000/s pro Messarm 9, 11). Durch den Vorschub des zweiten Messarms 11 in Längsrichtung L gelangt die zweite Kugel 14 nach Überfahren der äußeren Fase 17 zum zweiten äußeren Fasenwinkel und darüber hinweg zur äußeren Rohrwandung 19. Die zweite Kugel 14 läuft ein entsprechendes Stück weit in Längsrichtung L, entlang der äußeren Rohrwandung 19.

Die erfindungsgemäße Messvorrichtung 1 gestattet die sehr kurze Messzeit von 0,8 Sekunden für das reine Messverfahren durch ihre sehr einfache Steuerung. Tatsächlich werden während des gesamten Messverfahrens die beiden Messarme 4, 6 lediglich in einer linearen Bewegung in Längsrichtung L des Rohrabschnittes 7 verfahren. Es findet keine Bewegung der Messarme 4, 6 senkrecht zur Längsrichtung L statt. Durch die gewinkelte Anordnung der Messarme 4, 6 ist es jedoch möglich, trotz der linearen Bewegung ausschließlich in Längsrichtung L der Messarme 4, 6 ein gekrümmtes, in einer zweidimensionalen Ebene verlaufendes Rohrprofil zu bestimmen.

Fig. 3 zeigt den detaillierten Aufbau der Messvorrichtung 1. Der erste Messarm 4 und der zweite Messarm 6 sind Bereiche des in einem Querschnitt in der Bewegungsebene etwa flügelförmig ausgebildeten Läufers 2. Der Läufer 2 ist auf einer Führung 3 in Längsrichtung L linear verfahrbar. An dem dem Rohabschnitt 7 zugewandten Ende, weist der erste Messarm 4 den ersten Tastkopf 9 auf, und an seinem dem Rohrende zugewandten Ende weist der zweite Messarm 6 den zweiten Tastkopf 11 auf. Der erste Tastkopf 9 und der zweite Tastkopf 11 sind an einem ersten Messstab 21 bzw. einem zweiten Messstab 22 angeordnet, die beide in einer Rolllagerführung 28, 29 führungsstabil nur in Relativbewegungsrichtung S1, S2 hin- und her verfahrbar sind. Das dem Rohrabschnitt 7 abgewandte, in das Innere des Messarms 4, 6 zeigende Ende jeder Messstange 21, 22, weist jeweils eine Messplatte 23, 24 auf. Die Messplatte 23, 24 dient zur Reflektion eines von einem ersten elektronischen Messtaster 26 bzw. einem zweiten elektronischen Messtaster 27 zur ersten bzw. zweiten Messplatte 23, 24 abgegebenen Lichtsignals. Der erste elektronische Messtaster 26 ist in Verlängerung der Relativbewegungsachse S1 gegenüber dem ersten Messarm 4 positionsfest am ersten Messarm 4 befestigt. Der erste elektronische Messtaster 26 misst die Änderung des Abstandes zur ersten Messplatte 23 und damit die Verschiebung des ersten Tastkopfes 9 entlang der Relativbewegungsachse S1. Entsprechendes gilt für den zweiten Messarm 6.

Die indirekte Messung der Entfernung zwischen Tastkopf 9, 10 und Oberfläche des Rohrabschnitts 7 über in Rollenlagern 28, 29 verfahrbare Messstäbe 21, 22, ist unempfindlich gegenüber äußeren Störungen, wie Stößen.

Fig. 4 zeigt die Messvorrichtung 1 einer Explosionsansicht. Die Führung 3 und der Läufer 2 sind gegeneinander in Längsrichtung L verfahrbar. In der Führung 3 ist ein Antrieb 31 vorgesehen, der den Läufer 2 vorschiebt. Die Führung 3 ist auf der integrierten Sägemaschine positionsfest montiert. Auf der Führung 3 ist ein dritter elektronischer Messtaster 32 vorgesehen, der mit einer mit dem Läufer 2 positionsfest verbundenen, dritten Messplatte 33 zusammenwirkt. Der dritte elektronische Messtaster 32 gestattet die Messung der Länge der Verfahrstrecke des Läufers 2 in Längsrichtung L gegenüber der Führung 3.

Der erste elektronische Messtaster 26, der zweite elektronische Messtaster 27 und der dritte elektronische Messtaster 32 sind mit einer (nicht eingezeichneten) Recheneinheit verbunden, die aus den von den drei Lasersensoren 26, 27, 32 ständig gelieferten Entfemungsmesswerten das Profil einer Rohrwandung in dem Schnitt berechnet. Es können von jedem Sensor 8000 Messungen pro Sekunde zur Verfügung gestellt werden. Die Messwerte werden zunächst in Mess-Tripel synchronisiert und aus den Tripeln wird dann das Profil berechnet.

## Patentansprüche

1. Profilmessvorrichtung zur Messung des Profils einer Oberfläche eines Körpers (7), insbesondere des Profils der Oberfläche einer Wandung eines Rohrendes, mit einer Halteeinrichtung (8) für den Körper (7) und
einer in einer Verfahrrichtung (L) eindimensional verfahrbaren Verfahreinrichtung (2, 3), mit der während der Messung eine Relativstellung zwischen einem ersten Messarm (4) und der Oberfläche und einem zweiten Messarm (6) und der Oberfläche veränderbar ist, und
einer in einem während der Messung bestehen bleibenden Winkel (α₁) schräg zur Verfahrrichtung (L) vorgesehenen ersten Relativbewegungsrichtung (S1) und einer in einem während der Messung bestehen bleibenden Winkel (α₂) schräg zur Verfahrrichtung (L) und schräg zur ersten Relativbewegungsrichtung (S1) angeordneten zweiten Relativbewegungsrichtung (S2),
einem in erster Relativbewegungsrichtung (S1) relativ zu dem ersten Messarm (4) beweglichen ersten Tastkopf (9), mit dem die Oberfläche während der Messung abtastbar ist, und
mit einem in zweiter Relativbewegungsrichtung (S2) relativ zum zweiten Messarm (6) beweglichen zweiten Tastkopf (11), mit dem die Oberfläche während der Messung abtastbar ist, wobei
eine Verfahrbewegung der Verfahreinrichtung (2, 3) zu einer Ausweichbewegung in Form einer ersten Relativbewegung des ersten Tastkopfes (9) in den ersten Messarm (4) in erster Relativbewegungsrichtung (S1) hinein führt und in Form einer zweiten Relativbewegung des zweiten Tastkopfes (11) in den zweiten Messarm (6) in zweiter Relativbewegungsrichtung (S2) hinein führt, und mit einem die erste Relativbewegung messenden wenigstens einen ersten Tastkopfsensor (26, 27) und mit
einem eine zweite Relativbewegung messenden zweiten Tastkopfsensor (27).

2. Profilmessvorrichtung nach Anspruch 1,
**dadurch gekennzeichnet, dass** der erste und/oder zweite Messarm (4, 6) positionsfest an einem gegenüber einer Führung (3) verfahrbaren Läufer (2) angeordnet ist.

3. Profilmessvorrichtung nach Anspruch 2,
**dadurch gekennzeichnet, dass** der Läufer (2) und die Führung (3) linear gegeneinander verfahrbar sind.

4. Profilmessvorrichtung nach Anspruch 1 oder 2,
**dadurch gekennzeichnet, dass** der erste und/oder zweite Tastkopf (9, 11) die Oberfläche (7) ständig während der Messung berührt und der erste Tastkopf (9) vorzugsweise eine erste Kugel (13) und der zweite Tastkopf (11) vorzugsweise eine zweite Kugel (14) zur ständigen Anlage auf der Oberfläche (7) aufweisen.

5. Profilmessvorrichtung nach Anspruch 4
**gekennzeichnet durch** eine erste Andrückvorrichtung zwischen dem ersten Tastkopf (9) und dem ersten Messarm (4) und einer zweiten Andrückvorrichtung zwischen dem zweiten Tastkopf (11) und dem zweiten Messarm (6), mit der der erste Tastkopf (9) und der zweite Tastkopf (11) während der Messung gegen die Oberfläche (7) drückbar sind.

6. Profilmessvorrichtung nach wenigstens einem der vorstehenden Ansprüche,
**dadurch gekennzeichnet, dass** der wenigstens eine erste Tastkopf (9) mit wenigstens einer ersten Messplatte (23) positionsfest verbunden ist und in einem lichten Abstand von der wenigstens einen ersten Messplatte (23) ein erster Entfernungsmesser (26) positionsfest am wenigstens einen ersten Messarm (4) vorgesehen ist und auf die wenigstens eine erste Messplatte (23) gerichtet ist und/oder der zweite Tastkopf (11) mit einer zweiten Messplatte (24) positionsfest verbunden ist und in einem lichten Abstand von der zweiten Messplatte (24) ein zweiter Entfernungsmesser (27) positionsfest am zweiten Messarm (6) vorgesehen ist und auf die zweite Messplatte (24) gerichtet ist.

7. Profilmessvorrichtung nach Anspruch 6,
**dadurch gekennzeichnet, dass** der erste und zweite Messarm (4, 6) jeweils eine Führung (28, 29) für jeweils eine Messstange (21, 22) aufweisen, an deren der Oberfläche (7) zugewandtem Ende der erste bzw. zweite Tastkopf (9, 11) und an deren der Oberfläche (7) abgewandtem Ende die erste bzw. zweite Messplatte (23, 24) vorgesehen sind und der Entfernungsmesser (26, 27) positionsfest am ersten bzw. zweiten Messarm (4, 6) in einem lichten Abstand von der ersten bzw. zweiten Messplatte (23, 24) vorgesehen ist und auf die erste bzw. zweite Messplatte (23, 24) gerichtet ist und die erste und/oder zweite Führung vorzugsweise jeweils ein Rollenlager (28, 29) aufweisen.

8. Profilmessvorrichtung nach Anspruch 2,
**gekennzeichnet durch** einen Antrieb zwischen Führung (3) und Läufer (2), mit dem der Läufer (2) in Verfahrrichtung (L) antreibbar ist und **dadurch**, dass an der Führung (3) vorzugsweise ein dritter Entfernungsmesssensor (32) positionsfest angeordnet ist, der auf eine positionsfest an dem Läufer (2) angeordnete Messplatte (33) gerichtet ist.

9. Profilmessvorrichtung nach wenigstens einem der vorstehenden Ansprüche,
**gekennzeichnet durch** eine Recheneinheit, die mit dem ersten, zweiten und dritten Entfernungsmesser (26, 27, 33) verbunden ist und die aus den von den Entfernungsmessern (26, 27 ,33) gemessenen Daten das Profil eines Schnittes der Oberfläche des Körpers (7) berechnet.

10. Profilmessvorrichtung nach wenigstens einem der vorstehenden Ansprüche,
**dadurch gekennzeichnet, dass** die erste Relativbewegungsrichtung (S1) und die zweite Relativbewegungsrichtung (S2) in einer Ebene liegen und die Richtung der Verfahrbewegung (L) in derselben Ebene liegt.

11. Profilmessvorrichtung nach wenigstens einem der vorstehenden Ansprüche,
**dadurch gekennzeichnet, dass** der erste und zweite Tastkopf (9, 11) zwischen einem Minimalabstand, in dem sich die beiden Tastköpfe (9, 11) vorzugsweise berühren und einem Maximalabstand, der größer als die Schmalheit des Körpers (7) ist, relativ zueinander bewegbar sind.

12. Verfahren zur Messung des Profils einer Oberfläche eines Körpers (7), insbesondere des Profils der Oberfläche eines Rohrendes, mit einer Profilmessvorrichtung nach wenigstens einem der vorstehenden Ansprüche, indem der Körper (7) auf einer Halteeinrichtung (8) befestigt wird,
ein erster Tastkopf (9) und ein zweiter Tastkopf (11) die Oberfläche während der Messung abtasten,
eine Verfahreinrichtung (2, 3) in einer eindimensionalen Verfahrbewegung in einer Verfahrrichtung (L) eine Relativstellung zwischen einem ersten Messarm (4) und der Oberfläche des Körpers (7) und einem zweiten Messarm (6) und der Oberfläche des Körpers (7) während der Messung verändert,
die Verfahrbewegung der Verfahreinrichtung (2, 3) in Verfahrrichtung (L) während der Messung zu einer Ausweichbewegung des ersten Tastkopfes (9) in einer ersten Relativbewegungsrichtung (S1) und des zweiten Tastkopfes (11) in einer zweiten Relativbewegungsrichtung (S2) führt,
der erste Tastkopf (9) während der Messung in den ersten Messarm (4) hinein schräg zur Verfahrrichtung (L) in einem während der Messung bestehen bleibenden Winkel (α₁) in der ersten Relativbewegungsrichtung (S1) bewegt wird, eine erste Relativbewegung zwischen dem ersten Tastkopf (9) und dem ersten Messarm (4) mit einem ersten Tastkopfsensor (26, 27) gemessen wird und der zweite Tastkopf (11) während der Messung in den zweiten Messarm (6) hinein schräg zu der Verfahrrichtung (L) in der zweiten Relativbewegungsrichtung (S2) bewegt wird, die während der Messung in einem Winkel (α₂) bestehen bleibt, eine zweite Relativbewegung zwischen dem zweiten Tastkopf (11) und dem zweiten Messarm (6) mit einem zweiten Tastkopfsensor (27) gemessen wird.

13. Verfahren nach Anspruch 12,
**dadurch gekennzeichnet, dass** die Verfahreinrichtung (2, 3) durch einen Antrieb (31) angetrieben wird,
der wenigstens eine erste Tastkopf (9, 11) dadurch gegen die Oberfläche gedrückt wird und in einer Relativbewegung zum wenigstens einen ersten Messarm (4, 6) dem Druck ausweicht.

14. Verfahren nach Anspruch 12 oder 13,
**dadurch gekennzeichnet, dass** die Verfahreinrichtung (2, 3) eine lineare Bewegung (L) ausführt.

15. Verfahren nach wenigstens einem der Ansprüche 12, 13 oder 14,
**dadurch gekennzeichnet, dass** die erste und/oder zweite Relativbewegung mit einem ersten und/oder zweiten Tastkopfsensor (26, 27) gemessen wird und die Verfahrbewegung (L) mit einem dritten Sensor (33) gemessen wird und die Messwerte der drei Sensoren (26, 27, 33) einer Recheneinheit zugeführt werden und dort das Profil der Oberfläche berechnet wird.

## Claims

1. A profile measuring apparatus for measuring the profile of a surface of a body (7), in particular the profile of the surface of a wall of a pipe end, with a holding device (8) for the body (7) and
a travelling device (2, 3) which is capable of being travelled in one dimension in a travelling direction (L) and by which a relative setting between a first measuring arm (4) and the surface and a second measuring arm (6) and the surface is capable of being altered during the measurement, and
a first relative movement direction (S1) provided obliquely to the travelling direction (L) at an angle (α₁) retained during the measurement and a second relative movement direction (S2) situated obliquely to the travelling direction (L) and obliquely to the first relative movement direction (S1) at an angle (α₂) retained during the measurement,
a first scanning head (9) which is movable relative to the first measuring arm (4) in the first relative movement direction (S1) and by which the surface is capable of being scanned during the measurement, and
with a second scanning head (11) which is movable relative to the second measuring arm (6) in the second relative movement direction (S2) and by which the surface is capable of being scanned during the measurement, wherein
a travelling movement of the travelling device (2, 3) leads to a yielding movement in the form of a first relative movement of the first scanning head (9) into the first measuring arm (4) in the first relative movement direction (S1) and in the form of a second relative movement of the second scanning head (11) into the second measuring arm (6) in the second relative movement direction (S2), and with an at least one first scanning head sensor (26, 27) measuring the first relative movement and with
a second scanning head sensor (27) measuring a second relative movement.

2. A profile measuring apparatus according to Claim 1, **characterized in that** the first and/or the second measuring arm (4, 6) is arranged fixed in position on a slide (2) capable of being travelled with respect to a guide (3).

3. A profile measuring apparatus according to Claim 2, **characterized in that** the slide (2) and the guide (3) are capable of being travelling in a linear manner with respect to each other.

4. A profile measuring apparatus according to Claim 1 or 2, **characterized in that** the first and/or the second scanning head (9, 11) constantly touches the surface (7) during the measurement, and the first scanning head (9) preferably has a first sphere (13) and the second scanning head (11) preferably has a second sphere (14) for constant abutment against the surface (7).

5. A profile measuring apparatus according to Claim 4, **characterized by** a first pressing apparatus between the first scanning head (9) and the first measuring arm (4) and a second pressing apparatus between the second scanning head (11) and the second measuring arm (6), by which the first scanning head (9) and the second scanning head (11) are capable of being pressed against the surface (7) during the measurement.

6. A profile measuring apparatus according to at least one of the preceding Claims, **characterized in that** the at least one first scanning head (9) is connected to at least one first measurement plate (23) in a manner fixed in position, and at an internal distance from the at least one first measurement plate (23) a first distance meter (26) is provided on the at least one first measuring arm (4) in a manner fixed in position and is directed towards the at least one first measurement plate (23), and/or the second scanning head (11) is connected to a second measurement plate (24) in a manner fixed in position, and at an internal distance from the second measurement plate (24) a second distance meter (27) is provided on the second measuring arm (6) in a manner fixed in position and is directed towards the second measurement plate (24).

7. A profile measuring apparatus according to Claim 6, **characterized in that** the first and second measuring arms (4, 6) in each case have a guide (28, 29) for a measuring rod (21, 22) in each case, on the end of which facing the surface (7) are provided the first and second scanning heads (9, 11) respectively and on the end of which facing away from the surface (7) are provided the first and second measurement plates (23, 24) respectively, and the distance meter (26, 27) is provided on the first and second measuring arm (4, 6) respectively in a manner fixed in position at an internal distance from the first and second measurement plate (23, 24) respectively and is directed towards the first and second measurement plate (23, 24) respectively, and the first and/ or second guide preferably has a roller bearing (28, 29) in each case.

8. A profile measuring apparatus according to Claim 2, **characterized by** a drive between the guide (3) and the slide (2), by which the slide (2) is capable of being driven in the travelling direction (L), and in that preferably a third distance measurement sensor (32), which is directed towards a measurement plate (33) arranged on the slide (2) in a manner fixed in position, is preferably arranged on the guide (3) in a manner fixed in position.

9. A profile measuring apparatus according to at least one of the preceding Claims, **characterized by** a calculating unit which is connected to the first, second and third distance meter (26, 27, 33) and which calculates the profile of a section of the surface of the body (7) from the data measured by the distance meters (26, 27, 33).

10. A profile measuring apparatus according to at least one of the preceding Claims, **characterized in that** the first relative movement direction (S1) and the second relative movement direction (S2) are situated in one plane and the direction of the travelling movement (L) is situated in the same plane.

11. A profile measuring apparatus according to at least one of the preceding Claims, **characterized in that** the first and second scanning heads (9, 11) are movable relative to each other between a minimum distance, in which the two scanning heads (9, 11) preferably touch each other, and a maximum distance, which is greater than the narrowness of the body (7).

12. A method of measuring the profile of a surface of a body (7), in particular the profile of the surface of a pipe end, with a profile measuring apparatus according to at least one of the preceding Claims, in which the body (7) is fastened to a holding device (8),
a first scanning head (9) and a second scanning head (11) scan the surface during the measurement,
a travelling device (2, 3) in a one-dimensional travelling movement in a travelling direction (L) alters a relative setting between a first measuring arm (4) and the surface of the body (7) and a second measuring arm (6) and the surface of the body (7) during the measurement,
the travelling movement of the travelling device (2, 3) in the travelling direction (L) during the measurement leads to a yielding movement of the first scanning head (9) in a first relative movement direction (S1) and of the second scanning head (11) in a second relative movement direction (S2),
the first scanning head (9) is moved during the measurement into the first measuring arm (4) in the first relative movement direction (S1) obliquely to the travelling direction (L) at an angle (α₁) retained during the measurement,
a first relative movement between the first scanning head (9) and the first measuring arm (4) is measured with a first scanning head sensor (26, 27), and
the second scanning head (11) is moved during the measurement into the second measuring arm (6) in the second relative movement direction (S2) - which is retained at an angle (α₂) during the measurement - obliquely to the travelling direction (L),
a second relative movement between the second scanning head (11) and the second measuring arm (6) is measured with a second scanning head sensor (27).

13. A method according to Claim 12, **characterized in that** the travelling device (2, 3) is driven by a drive (31), and as a result the at least one scanning head (9, 11) is pressed against the surface and yields to the pressure in a relative movement towards the at least one measuring arm (4, 6).

14. A method according to Claim 12 or 13, **characterized in that** the travelling device (2, 3) performs a linear movement (L).

15. A method according to at least one of Claims 12, 13 or 14, **characterized in that** the first and/or second relative movement is measured with a first and/or second scanning head sensor (26, 27), and the travelling direction (L) is measured with a third sensor (33) and the measurement values of the three sensors (26, 27, 33) are supplied to a calculating unit and the profile of the surface is calculated there.

## Revendications

1. Dispositif de mesure de profil pour mesurer le profil d'une surface d'un corps (7), en particulier du profil de la surface d'une paroi d'une extrémité de tube, avec un dispositif de maintien (8) pour le corps (7) et
un dispositif de déplacement (2, 3) déplaçable de manière unidimensionnelle dans un sens de déplacement (L), avec lequel une position relative entre un premier bras de mesure (4) et la surface et un second bras de mesure (6) et la surface peut être modifiée pendant la mesure et
un premier sens de mouvement relatif (S1) prévu dans un angle restant (α1) pendant la mesure, oblique par rapport au sens de déplacement (L), et un second sens de mouvement relatif (S2) placé dans un angle restant (α2) pendant la mesure, oblique par rapport au sens de déplacement (L) et oblique par rapport au premier sens de mouvement relatif (S1),
une première sonde (9) mobile dans le premier sens de mouvement relatif (S1) relatif par rapport au premier bras de mesure (4), sonde avec laquelle la surface peut être balayée pendant la mesure et
avec une seconde sonde (11) mobile dans le second sens de mouvement relatif (S2) relatif par rapport au second bras de mesure (6), sonde avec laquelle la surface peut être balayée pendant la mesure, et
un mouvement de déplacement du dispositif de déplacement (2, 3) mène à un mouvement de déviation sous forme d'un premier mouvement relatif de la première sonde (9) dans le premier bras de mesure (4) dans le premier sens de mouvement relatif (S1) et sous forme d'un second mouvement relatif de la seconde sonde (11) dans le second bras de mesure (6) dans le second sens de mouvement relatif (S2) et avec
au moins un premier capteur de sonde (26, 27) qui mesure le premier mouvement relatif et avec
un second capteur de sonde (27) qui mesure un second mouvement relatif.

2. Dispositif de mesure de profil selon la revendication 1,
**caractérisé en ce que** le premier et/ou le second bras de mesure (4, 6) est placé en position fixe sur un rotor (2) déplaçable par rapport à un guide (3).

3. Dispositif de mesure de profil selon la revendication 2,
**caractérisé en ce que** le rotor (2) et le guide (3) sont déplaçables linéairement l'un contre l'autre.

4. Dispositif de mesure de profil selon la revendication 1 ou 2,
**caractérisé en ce que** la première et/ou la seconde sonde (8, 11) touche la surface (7) en continu pendant la mesure et la première sonde (9) présente de préférence une première bille (13) et la seconde sonde (11) de préférence une seconde bille (14) pour l'appui continu contre la surface (7).

5. Dispositif de mesure de profil selon la revendication 4,
**caractérisé par** un premier dispositif de pression entre la première sonde (9) et le premier bras de mesure (4) et un second dispositif de pression entre la seconde sonde (11) et le second bras de mesure (6) avec lequel la première sonde (9) et la seconde sonde (11) peuvent être appuyées pendant la mesure contre la surface (7).

6. Dispositif de mesure de profil selon au moins l'une des revendications précédentes,
**caractérisé en ce que** la première sonde qui existe au moins (9) est reliée en position fixe à au moins une première plaque de mesure (23) et qu'il est prévu, à une distance nette de la première plaque de mesure qui existe au moins (23), un premier télémètre (26) en position fixe sur le premier bras de mesure (4) qui existe au moins et qui est orienté sur la première plaque de mesure qui existe au moins (23) et/ou la seconde sonde (11) est reliée en position fixe à une seconde plaque de mesure (24) et qu'il est prévu, à une distance nette de la seconde plaque de mesure (24) un second télémètre (27) en position fixe sur le second bras de mesure (6) et qui est orienté sur la seconde plaque de mesure (24).

7. Dispositif de mesure de profil selon la revendication 6,
**caractérisé en ce que** le premier et le second bras de mesure (4, 6) présentent respectivement un guide (28, 29) pour respectivement une tige de mesure (21, 22) à l'extrémité tournée vers la surface (7) de laquelle la première ou la seconde sonde (9, 11) et à l'extrémité détournée de la surface (7) de laquelle la première ou la seconde plaque de mesure (23, 24) sont prévues et le télémètre (26, 27) est prévu en position fixe sur le premier ou le second bras de mesure (4, 6) à une distance nette de la première ou de la seconde plaque de mesure (23, 24) et est orienté sur la première ou la seconde plaque de mesure (23, 24) et le premier et/ou le second guide présentent de préférence respectivement un palier à rouleaux (28, 29).

8. Dispositif de mesure de profil selon la revendication 2,
**caractérisé par** un entraînement entre le guide (3) et le rotor (2) avec lequel le rotor (2) peut être entraîné dans le sens de déplacement (L) et en ce que de préférence un troisième capteur de télémètre (32) est placé en position fixe sur le guide (3), capteur qui est orienté sur une plaque de mesure (33) qui est placée en position fixe sur le rotor (2).

9. Dispositif de mesure de profil selon au moins l'une des revendications précédentes,
**caractérisé par** une unité de calcul qui est reliée au premier, au second et au troisième télémètre (26, 27, 33) et qui calcule le profil d'une coupe de la surface du corps (7) à partir des données mesurées par les télémètres (26, 27, 33).

10. Dispositif de mesure de profil selon au moins l'une des revendications précédentes,
**caractérisé en ce que** le premier sens de mouvement relatif (S1) et le second sens de mouvement relatif (S2) se trouvent dans un plan et le sens du mouvement de déplacement (L) se situe dans le même plan.

11. Dispositif de mesure de profil selon au moins l'une des revendications précédentes,
**caractérisé en ce que** la première et la seconde sonde (9, 11) sont relativement mobiles l'une par rapport à l'autre entre une distance minimale dans laquelle les deux sondes (9, 11) de préférence se touchent et une distance maximale qui est plus grande que la minceur du corps (7).

12. Procédé pour la mesure du profil d'une surface d'un corps (7), en particulier du profil de la surface d'une extrémité de tube, avec un dispositif de mesure de profil selon au moins l'une des revendications précédentes, le corps (7) étant fixé sur un dispositif de retenue (8),
une première sonde (9) et une seconde sonde (11) balayant la surface pendant la mesure,
un dispositif de déplacement (2, 3) modifiant, dans un mouvement de déplacement unidimensionnel dans un sens de déplacement (L), une position relative entre un premier bras de mesure (4) et la surface du corps (7) et un second bras de mesure (6) et la surface du corps (7) pendant la mesure,
le mouvement de déplacement du dispositif de déplacement (2, 3) dans le sens de déplacement (L) conduisant, pendant la mesure, à un mouvement de déviation de la première sonde (9) dans un sens de mouvement relatif (S1) et de la seconde sonde (11) dans un second sens de mouvement relatif (S2),
la première sonde (9) étant déplacée pendant la mesure à l'intérieur du premier bras de mesure (4), obliquement par rapport au sens de déplacement (L), dans le premier sens de mouvement relatif (S1) dans un angle (α1) qui reste pendant la mesure,
un premier mouvement relatif étant mesuré entre la première sonde (9) et le premier bras de mesure (4) avec un premier capteur de sonde (26, 27) et la seconde sonde (11) étant déplacée pendant la mesure à l'intérieur du second bras de mesure (6), obliquement par rapport au sens de déplacement (L), dans le second sens de mouvement relatif (S2) qui reste pendant la mesure dans un angle (α2),
un second mouvement relatif étant mesuré entre la seconde sonde (11) et le second bras de mesure (7) avec un second capteur de sonde (27).

13. Procédé selon la revendication 12,
**caractérisé en ce que** le dispositif de déplacement est entraîné par un entraînement (31),
la première sonde qui existe au moins (9, 11) est appuyée de ce fait contre la surface et évite la pression dans un mouvement relatif par rapport au premier bras de mesure (4, 6) qui existe au moins.

14. Procédé selon la revendication 12 ou 13,
**caractérisé en ce que** le dispositif de déplacement (2, 3) effectue un mouvement linéaire (L).

15. Procédé selon au moins l'une des revendications 12, 13 ou 14,
**caractérisé en ce que** le premier et/ou le second mouvement relatif est mesuré avec un premier et/ou un second capteur de sonde (26, 27) et le mouvement de déplacement (L) est mesuré avec un troisième capteur (33) et les valeurs de mesure des trois capteurs (26, 27, 33) sont amenées à une unité de calcul où le profil de la surface est calculé.
